(19) Europäisches Patentamt
European Patent Office
Office européen des brevets

(11) EP 4 435 059 A1

(12) EUROPEAN PATENT APPLICATION
published in accordance with Art. 153(4) EPC

(43) Date of publication:
**25.09.2024 Bulletin 2024/39**

(21) Application number: **22895655.3**

(22) Date of filing: **16.11.2022**

(51) International Patent Classification (IPC):
***C08L 101/00*** *(2006.01)* ***C08K 3/11*** *(2018.01)*
***C08K 5/1515*** *(2006.01)* ***C08K 7/06*** *(2006.01)*
***C08L 63/00*** *(2006.01)* ***C08L 67/02*** *(2006.01)*

(52) Cooperative Patent Classification (CPC):
**C08K 13/08; C08K 3/04; C08K 3/11; C08K 5/1515; C08K 7/06; C08L 63/00; C08L 67/02; C08L 101/00;**
C08K 3/2279; C08K 5/136; C08K 5/34924;
C08K 5/5313; C08K 9/04; C08K 9/08; Y02W 30/62

(86) International application number:
**PCT/JP2022/042606**

(87) International publication number:
**WO 2023/090374 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2021 JP 2021187358**

(71) Applicants:
- **Mitsubishi Chemical Corporation**
  **Chiyoda-ku**
  **Tokyo 100-8251 (JP)**
- **Shinryo Corporation**
  **Kitakyushu-shi, Fukuoka, 806-0021 (JP)**

(72) Inventors:
- **TAKASHIMA Shoichi**
  **Hiratsuka-shi, Kanagawa 254-0016 (JP)**
- **MUTO Fumihiro**
  **Hiratsuka-shi, Kanagawa 254-0016 (JP)**
- **ARITA Hiroyuki**
  **Kitakyushu-shi, Fukuoka 806-0021 (JP)**
- **SASAKA Ryo**
  **Kitakyushu-shi, Fukuoka 806-0004 (JP)**
- **SUZUKI Takayuki**
  **Hiratsuka-shi, Kanagawa 254-0016 (JP)**

(74) Representative: **Hoffmann Eitle**
**Patent- und Rechtsanwälte PartmbB**
**Arabellastraße 30**
**81925 München (DE)**

# (54) RESIN COMPOSITION, PELLETS AND MOLDED ARTICLE

(57) To provide a resin composition, a pellet and a molded article formed from the resin composition. The resin composition contains: 100 parts by mass of a thermoplastic resin; 5 to 50 parts by mass of a recycled carbon fiber; and 5 to 60 parts by mass of a flame retardant; wherein the recycled carbon fiber is a baked product of a composite of a resin and a carbon fiber, and comprises a residue derived from the resin at a percentage of 10% by mass or more of the content of the recycled carbon fiber.



Processed by Luminess, 75001 PARIS (FR)

## Description

[Technical Field]

The present invention relates to a resin composition, a pellet and a molded article. The present invention particularly relates to a resin composition obtained by using a recycled carbon fiber.

[Background Art]

Crystalline thermoplastic resins have been widely used for components of various devices. In particular, reinforcing fibers have been widely used in order to enhance mechanical strength of molded articles to be formed from crystalline thermoplastic resins. One of representative examples of such reinforcing fibers is a carbon fiber.
From the viewpoint of effective utilization of limited resources, the reuse of carbon fibers has also been investigated. As recycled carbon fibers, for example, those described in Patent Literatures 1 and 2 are known.

[Citation List]

[Patent Literature]

[Patent Literature 1]
Japanese Patent Laid-Open No. 2016-041800
[Patent Literature 2]
International Publication No. WO 2018/212016

[Summary of Invention]

[Technical Problem]

However, a crystalline thermoplastic resin having a recycled carbon fiber blended therein tends to be inferior in mechanical strength to a thermoplastic resin having a newly produced carbon fiber, that is, a virgin carbon fiber blended therein. In addition, it has been found that when the crystalline thermoplastic resin and the recycled carbon fiber are used, they cannot be melt kneaded well, resulting in inferior productivity. Furthermore, in some applications, flame retardancy may be required.
An object of the present invention is to solve such problems by ensuring sufficient mechanical strength of a resin composition obtained by using a crystalline thermoplastic resin and a recycled carbon fiber and further making it excellent in productivity and also in flame retardancy. Another object of the present invention is to provide a pellet and a molded article formed from the resin composition.

[Solution to Problem]

The present inventors conducted research to address the above-mentioned problems, and as a result, discovered that the problems described above could be solved by using a baked product of a composite of a resin and the carbon fiber, comprising a residue derived from the resin at a percentage of 10% by mass or more of the content of the recycled carbon fiber as the recycled carbon fiber.
Specifically, the problems described above are solved by the following means.

<1> A resin composition comprising:

100 parts by mass of a thermoplastic resin;
5 to 50 parts by mass of a recycled carbon fiber; and
5 to 60 parts by mass of a flame retardant;
wherein the recycled carbon fiber is a baked product of a composite of a resin and a carbon fiber, and comprises a residue derived from the resin at a percentage of 10% by mass or more of the content of the recycled carbon fiber.

<2> The resin composition according to <1>, wherein the thermoplastic resin comprises a crystalline thermoplastic

resin.

<3> The resin composition according to <1>, wherein the thermoplastic resin comprises a polybutylene terephthalate resin.

<4> The resin composition according to <1>, wherein 30 to 100% by mass of the resin composition is a polybutylene terephthalate resin.

<5> The resin composition according to any one of <1> to <4>, wherein the recycled carbon fiber comprises a baked product of a composite of a resin containing a benzene ring and a carbon fiber.

<6> The resin composition according to any one of <1> to <5>, wherein the recycled carbon fiber comprises a baked product of a composite of an epoxy resin and a carbon fiber.

<7> The resin composition according to any one of <1> to <6>, wherein the flame retardant comprises a halogen-based flame retardant.

<8> The resin composition according to any one of <1> to <7>, further comprising 2.0 to 10.0 parts by mass of an antimony compound with respect to 100 parts by mass of the crystalline thermoplastic resin.

<9> The resin composition according to any one of <1> to <8>, further comprising at least one functional group-containing compound selected from the group consisting of an epoxy group-containing compound, a carbodiimide compound, an oxazoline group-containing compound, an oxazine group-containing compound, a carboxy group-containing compound and an amide group-containing compound.

<10> The resin composition according to <9>, wherein the functional group-containing compound comprises an epoxy group-containing compound.

<11> The resin composition according to any one of <1> to <10>, wherein the recycled carbon fiber comprises 25% by mass or less of a residue derived from the resin.

<12> The resin composition according to any one of <1> to <11>, wherein: 30 to 100% by mass of the resin composition is a polybutylene terephthalate resin; the recycled carbon fiber comprises a baked product of a composite of a resin containing a benzene ring and a carbon fiber; the recycled carbon fiber comprises a baked product of a composite of an epoxy resin and a carbon fiber; the flame retardant comprises a halogen-based flame retardant; the resin composition further comprises 2.0 to 10.0 parts by mass of an antimony compound with respect to 100 parts by mass of the crystalline thermoplastic resin; the resin composition further comprises at least one functional group-containing compound selected from the group consisting of an epoxy group-containing compound, a carbodiimide compound, an oxazoline group-containing compound, an oxazine group-containing compound, a carboxy group-containing compound and an amide group-containing compound; and the recycled carbon fiber comprises 25% by mass or less of a residue derived from the resin.

<13> The resin composition according to any one of <1> to <12>, comprising 5 to 40 parts by mass of the recycled carbon fiber with respect to 100 parts by mass of the thermoplastic resin.

<14> The resin composition according to any one of <1> to <13>, wherein the mass ratio (b)/(c) of the recycled carbon fiber (b) to the flame retardant (c) in the resin composition is 0.4 or more.

<15> A pellet formed from the resin composition according to any one of <1> to <14>.

<16> A molded article formed from the resin composition according to any one of <1> to <14>.

<17> The molded article according to <16>, which is a component of automotive chassis.

[Advantageous Effects of Invention]

The present invention has enabled to ensure the resin composition obtained by using the crystalline thermoplastic resin and the recycled carbon fiber in mechanical strength and to further make it excellent in productivity and also in flame retardancy. The present invention has been also able to provide a pellet and a molded article formed from the resin composition.

[Description of Embodiments]

Hereinafter, modes for carrying out the present invention (the mode for carrying out the present invention is hereinafter simply referred to as "the present embodiment") will be described in detail. The following embodiments are illustrations for describing the present invention and it is not intended to limit the present invention to only the present embodiments.

By the term "to" as used herein with respect to the numerical range, it is meant that the numerical values before and after "to" are included as the lower limit or the upper limit.

Various physical property values and characteristic values as described herein are values measured at 23°C, unless otherwise specified.

As used herein, the weight average-molecular weight and number average-molecular weight are values measured in terms of polystyrene by GPC (gel permeation chromatography) method.

When the standards referred to in the present specification differ in measurement methods or the like depending on the year, unless otherwise stated, the standards as of January 1, 2021 will be based on.

The resin composition of the present embodiment comprises 100 parts by mass of a thermoplastic resin, 5 to 50 parts by mass of a recycled carbon fiber and 5 to 60 parts by mass of a flame retardant; and is characterized in that the recycled carbon fiber is a baked product of a composite of a resin and a carbon fiber and comprises a residue derived from the resin at a percentage of 10% by mass or more of the content of the recycled carbon fiber. When the resin composition is comprised in this manner, a resin composition obtained by using a thermoplastic resin, particularly a crystalline thermoplastic resin and a recycled carbon fiber can achieve the mechanical strength that is comparable to the resin composition obtained by using a crystalline thermoplastic resin, particularly a crystalline thermoplastic resin and a virgin carbon fiber; and a resin composition excellent in productivity and also in flame retardancy can be obtained. In particular, in the present embodiment, the flame retardancy can also be enhanced compared to when using the virgin carbon fiber. This is presumed to be because the resin residue contained in the recycled carbon fiber is so-called charcoal and therefore easily forms char and easily blocks oxygen.

The present embodiment is preferably a resin composition comprising 100 parts by mass of a thermoplastic resin comprising a crystalline thermoplastic resin, 5 to 50 parts by mass (preferably 5 to 40 parts by mass) of a recycled carbon fiber and 5 to 60 parts by mass of a flame retardant; wherein the recycled carbon fiber is a baked product of a composite of a resin and a carbon fiber and comprises a residue derived from the resin at a percentage of 10% by mass or more of the content of the recycled carbon fiber.

The present embodiment is also preferably a resin composition comprising 100 parts by mass of a crystalline thermoplastic resin, 5 to 50 parts by mass (preferably 5 to 40 parts by mass) of a recycled carbon fiber and 5 to 60 parts by mass of a flame retardant; wherein the recycled carbon fiber is a baked product of a composite of a resin and a carbon fiber, and comprises a residue derived from the resin at a percentage of 10% by mass or more of the content of the recycled carbon fiber.

<Thermoplastic resin>

The resin composition of the present embodiment comprises a thermoplastic resin, and preferably comprises at least a crystalline thermoplastic resin. The thermoplastic resin may be an amorphous resin or may be a blend of an amorphous resin and a crystalline thermoplastic resin.

In one preferred embodiment, the thermoplastic resin is a crystalline thermoplastic resin.

In another preferred embodiment, the thermoplastic resin is a blend of a crystalline thermoplastic resin and an amorphous thermoplastic resin.

<<Crystalline thermoplastic resin»

The crystalline thermoplastic resin is not specified in its type or the like, but preferred examples of the thermoplastic resin include a polyester resin (thermoplastic polyester resin) such as a polyethylene terephthalate resin, a polytrimethylene terephthalate resin or a polybutylene terephthalate resin; a polyamide resin; a polyolefin resin such as a polyethylene resin, a polypropylene resin or a cyclic cycloolefin resin; a polyacetal resin; a polyimide resin. The thermoplastic resin more preferably comprises at least one selected from the group consisting of a polyester resin.

In one example of a blend form of the crystalline thermoplastic resin in the resin composition of the present embodiment, the crystalline thermoplastic resin comprises a polybutylene terephthalate. The content of the polybutylene terephthalate resin in the thermoplastic resin in the resin composition of the present embodiment is preferably 30 to 100% by mass.

In the first embodiment In a blend form of the crystalline thermoplastic resin in the resin composition of the present embodiment, the percentage of the polybutylene terephthalate resin in the crystalline thermoplastic resin is preferably 60 to 100% by mass, more preferably 80 to 100% by mass, even more preferably 90 to 100% by mass, still more preferably 95 to 100% by mass, and further more preferably 98 to 100% by mass.

Another example of a blend form of the crystalline thermoplastic resin in the resin composition of the present embodiment comprises a polybutylene terephthalate resin and a polyethylene terephthalate resin. The total content of a polybutylene terephthalate resin and a polyethylene terephthalate resin in the crystalline thermoplastic resin in the resin composition of the present embodiment is preferably 80 to 100% by mass, more preferably 90 to 100% by mass, even more preferably 95 to 100% by mass, still more preferably 97 to 100% by mass, and further more preferably 99 to 100% by mass.

In the blend form, the mass proportion of the polyethylene terephthalate resin to the polybutylene terephthalate resin is preferably 10 parts by mass or more of the polyethylene terephthalate resin, more preferably 20 parts by mass or more, even more preferably 30 parts by mass or more, and still more preferably 35 parts or more, with respect to 100 parts by mass of the polybutylene terephthalate resin. In addition, the mass proportion is preferably 100 parts by mass

or less of the polyethylene terephthalate resin, more preferably 90 parts by mass or less, even more preferably 80 parts by mass or less, still more preferably 70 parts by mass or less, further more preferably 60 parts by mass or less, and particularly more preferably less than 50 parts by mass, with respect to 100 parts by mass of the polybutylene terephthalate resin.

The polyester resin is a polyester obtained by polycondensation of a dicarboxylic acid compound and a dihydroxy compound, polycondensation of an oxycarboxylic acid compound, or polycondensation of these compounds, or the like, and may be either a homopolyester or a copolyester.

As the dicarboxylic acid compound constituting the polyester resin, an aromatic dicarboxylic acid or an ester-forming derivative thereof is preferably used.

Examples of the aromatic carboxylic acid include terephthalic acid, isophthalic acid, orthophthalic acid, 1,5-naphthalene dicarboxylic acid, 2,5-naphthalene dicarboxylic acid, 2,6-naphthalene dicarboxylic acid, biphenyl-2,2'-dicarboxylic acid, biphenyl-3,3'-dicarboxylic acid, biphenyl-4,4'-dicarboxylic acid, diphenyl ether-4,4'-dicarboxylic acid, diphenylmethane-4,4'-dicarboxylic acid, diphenylsulfone-4,4'-dicarboxylic acid, diphenylisopropylidene-4,4'-dicarboxylic acid, 1,2-bis(phenoxy)ethane-4,4'-dicarboxylic acid, anthracene-2,5-dicarboxylic acid, anthracene-2,6-dicarboxylic acid, p-t-phenylene-4,4'-dicarboxylic acid and pyridine-2,5-dicarboxylic acid. Terephthalic acid can be preferably used.

These aromatic dicarboxylic acids may be used alone or in combination of two or more thereof. As is well known, these can be used in a polycondensation reaction not only as a free acid but also as an ester-forming derivative thereof such as a dimethyl ester thereof.

In addition, one or more selected from the group consisting of an aliphatic dicarboxylic acid such as adipic acid, azelaic acid, dodecanedioic acid or sebacic acid, and an alicyclic dicarboxylic acid such as 1,2-cyclohexane dicarboxylic acid, 1,3-cyclohexane dicarboxylic acid or 1,4-cyclohexane dicarboxylic acid, if in a small amount, can be used by mixing it with such an aromatic dicarboxylic acid.

Examples of the dihydroxy compound constituting the thermoplastic polyester resin include an aliphatic diol such as ethylene glycol, propylene glycol, butanediol, hexylene glycol, neopentyl glycol, 2-methylpropane-1,3-diol, diethylene glycol or triethylene glycol; an aliphatic diol such as cyclohexane-1,4-dimethanol; and mixtures thereof. One or more long-chain diols having a molecular weight of 400 to 6,000, such as polyethylene glycol, poly-1,3-propylene glycol or polytetramethylene glycol, if in a small amount, may be copolymerized therewith.

An aromatic diol such as hydroquinone, resorcinol, naphthalenediol, dihydroxydiphenyl ether or 2,2-bis(4-hydroxyphenyl)propane can be also used.

In addition to the above bifunctional monomers, a trifunctional monomer such as trimellitic acid, trimesic acid, pyromellitic acid, pentaerythritol or trimethylolpropane for introducing a branched structure, and/or a monofunctional compound such as a fatty acid for molecular weight adjustment can be also used in a small amount in combination.

The polyester resin to be used is usually mainly composed of a polycondensate of a dicarboxylic aid and a diol, that is, it is usually composed of 50% by mass, preferably 70% by mass or more of this polycondensate based on the total content of the polyester resin. The dicarboxylic acid is preferably an aromatic carboxylic acid, and the diol is preferably an aliphatic diol.

Among them, the polyester resin is preferably a polyalkylene terephthalate resin in which 95 mol% or more of the acid component is comprised of terephthalic acid and 95% by mass or more of the alcohol component is comprised of an aliphatic diol. Typical examples of the polyalkylene terephthalate resin include a polybutylene terephthalate resin and a polyethylene terephthalate resin. The polybutylene terephthalate resin or the polyethylene terephthalate resin is preferably one close to a homopolyester, i.e., 95% by mass or more of the resin is comprised of a terephthalic acid component and 1,4-butanediol or ethylene glycol component.

In the present embodiment, the thermoplastic polyester resin preferably comprises, as a main component, a polyethylene terephthalate resin or a polybutylene terephthalate resin and more preferably a polybutylene terephthalate resin.

In addition, the thermoplastic polyester resin also preferably has isophthalic acid, a dimer acid or a polyalkylene glycol, such as polytetramethylene glycol (PTMG), copolymerized. Such a copolymer refers to a copolymer that has a copolymerization rate of 1 mol% or more and less than 50 mol% with respect to all segments of polybuthylene terephthalate. In particular, the copolymerization rate is preferably 2 to 50 mol%, more preferably 3 to 40 mol%, and particularly preferably 5 to 30 mol%.

The relative viscosity of the polyester resin is preferably 0.5 to 2 dL/g. From the viewpoint of moldability and mechanical properties, the polyester resin more preferably has a relative viscosity in the range of 0.6 to 1.5 dL/g. Using a polyester resin having an relative viscosity of 0.5 dL/g or more tends to further improve a molded article of the polyester resin in mechanical strength. In contrast, using a polyester resin having an intrinsic viscosity of 2 dL/g or less tends to improve the resin composition in flowability and thereby moldability. The relative viscosity of the polyester resin is measured at 30°C in a mixed solvent of tetrachloroethane and phenol at a mass ratio of 1:1.

The acid value (AV) of the polyester resin is preferably 1 to 50 eq/t. When the acid value is in such a range, the resin composition excellent in hydrolysis resistance, thermal stability or the like can be obtained. The acid value was

determined by dissolving 0.5 g of the polyester resin in 25 mL of benzyl alcohol and titrating it with a 0.01 mol/L solution of sodium hydroxide in benzyl alcohol. The indicator to be used can be 0.10 g of phenolphthalein dissolved in a mixture of 50 mL of ethanol and 50 mL of water.

The content of a crystalline thermoplastic resin in the resin composition of the present embodiment is preferably 55% by mass or more, more preferably 60% by mass or more and even more preferably 65% by mass or more. The upper limit thereof is the amount at which all components other than the recycled carbon fiber and the flame retardant are the crystalline thermoplastic resin.

The resin composition of the present embodiment may comprise only one crystalline thermoplastic resin or two or more crystalline thermoplastic resins. When the resin composition comprises two or more crystalline thermoplastic resins, the total content is preferably within the above range.

<<Amorphous thermoplastic resin»

The resin composition of the present embodiment may comprise an amorphous thermoplastic resin. Examples of the amorphous thermoplastic resin include a polycarbonate resin; a styrenic resin; a polyetherimide resin; a polyphenylene ether resin; a polyphenylene sulfide resin; a polysulfone resin; and a polymethacrylate resin, and a polycarbonate resin and/or a styrenic resin is preferred, and a polycarbonate resin is more preferred.

The polycarbonate resin is a homopolymer or copolymer, which may be branched, obtained by reacting a dihydroxy compound or a dihydroxy compound and a small amount of a polyhydroxy compound with phosgene or a carboxylic acid diester. The process for producing the polycarbonate resin is not particularly limited, and the polycarbonate resin to be used may be one produced by a phosgene process (interfacial polymerization process) or melting process (transesterification process) as conventionally known.

The dihydroxy compound as a raw material is preferably an aromatic dihydroxy compound and include 2,2-bis(4-hydroxyphenyl)propane (i.e., bisphenol A), tetramethyl bisphenol A, bis(4-hydroxyphenyl)-p-diisopropylbenzene, hydroquinone, resorcinol and 4,4-dihydroxydiphenyl, and bisphenol A is preferred. The above aromatic dihydroxy compound having one or more tetraalkylphosphonium sulfonate molecules attached thereto can be also used.

Among the above-described polycarbonate resins, preferred is an aromatic polycarbonate resin derived from 2,2-bis(4-hydroxyphenyl)propane, or an aromatic polycarbonate copolymer derived from 2,2-bis(4-hydroxyphenyl)propane and another aromatic dihydroxy compound. The copolymer may be also a copolymer that is mainly composed of an aromatic polycarbonate, such as a copolymer of the aromatic polycarbonate therewith of a polymer or oligomer having a siloxane structure. Two or more of the above-described polycarbonate resins may be also mixed and used.

A monohydric aromatic hydroxy compound may be used to control the molecular weight of the polycarbonate resin. Examples of the monohydric aromatic hydroxy compound include m- and p-methylphenol, m- and p-propylphenol, p-tert-butylphenol and a p-long chain alkyl-substituted phenol.

The viscosity-average molecular weight (Mv) of the polycarbonate resin is preferably 5,000 or more, more preferably 10,000 or more, and even more preferably 13,000 or more. Using the polycarbonate resin having a viscosity-average molecular weight of 5,000 or more tends to further improve the resulting resin composition in mechanical strength. In addition, the viscosity-average molecular weight (Mv) of the polycarbonate resin is preferably 60,000 or less, more preferably 40,000 or less, and even more preferably 30,000 or less. Using the polycarbonate resin having a viscosity-average molecular weight of 60,000 or less tends to improve the resin composition in flowability and thereby moldability.

When the resin composition comprises two or more polycarbonate resins, the mixture preferably satisfies the above range (hereinafter, the molecular weight will be also considered in the same manner).

As used in the present embodiment, the viscosity-average molecular weight (Mv) of the polycarbonate resin refers to a value obtained by measuring the viscosity of a solution of the polycarbonate resin in methylene chloride at 20°C with an Ubbelohde viscometer to determine the intrinsic viscosity ([η]) and then performing calculation from the value of the viscosity according to the following Schnell viscosity formula.

$$[\eta] = 1.23 \times 10^{-4} Mv^{0.83}$$

The process for producing the polycarbonate resin is not particularly limited, and the polycarbonate resin to be used may be either one produced by a phosgene process (interfacial polymerization process) or one produced by a melting process (transesterification process). Also preferred is a polycarbonate resin prepared by subjecting a polycarbonate resin produced by a melting process to a post-treatment for adjusting the amount of terminal OH groups.

For details of the polycarbonate resin, in addition to the above, reference can be made to the description of paragraphs 0014 to 0041 of Japanese Patent Laid-Open No. 2021-127405, the content of which is incorporated herein.

For details of the styrenic resin, reference can be made to the description of paragraphs 0042 to 0048 of

Japanese Patent Laid-Open No. 2021-127405 and the description of paragraphs 0023 to 0033 of Japanese Patent Laid-Open No. 2021-021046, the contents of which are incorporated herein.

When the resin composition of the present embodiment comprises an amorphous thermoplastic resin (preferably polycarbonate resin), the content thereof is preferably 5 parts by mass or more, more preferably 7 parts by mass or more and even more preferably 10 parts by mass or more, with respect to 100 parts by mass of a crystalline thermoplastic resin, and it may be 15 parts by mass or more, 20 parts by mass or more, 25 parts by mass or more, 30 parts by mass or more, 35 parts by mass or more, or 40 parts by mass or more, depending on the application. In addition, the upper limit of the content of the amorphous thermoplastic resin (preferably polycarbonate resin) is preferably 55 parts by mass or less, more preferably 50 parts by mass or less and even more preferably 45 parts by mass or less, with respect to 100 parts by mass of a crystalline thermoplastic resin, and it may be 30 parts by mass or less or 15 parts by mass or less, depending on the application.

When the resin composition of the present embodiment comprises an amorphous thermoplastic resin, the total content of a polyester resin (preferably polybutylene terephthalate resin) and an amorphous thermoplastic resin (preferably polycarbonate resin) in a thermoplastic resin comprised in the resin composition of the present embodiment is preferably 80 to 100% by mass, more preferably 90 to 100% by mass, even more preferably 95 to 100% by mass, still more preferably 97 to 100% by mass, and further more preferably 99 to 100% by mass.

The resin composition of the present embodiment may comprise only one amorphous thermoplastic resin or two or more amorphous thermoplastic resins. When the resin composition comprises two or more amorphous thermoplastic resins, the total content is preferably within the above range.

The resin composition of the present embodiment may also comprise substantially no amorphous thermoplastic resin. As used herein, the term "comprise substantially no" means that the content of an amorphous thermoplastic resin is less than 5 parts by mass with respect to 100 parts by mass of a crystalline thermoplastic resin comprised in the resin composition. It is preferably 3 parts by mass or less, and more preferably 1 part by mass or less.

The content of a thermoplastic resin (a crystalline thermoplastic resin and/or an amorphous thermoplastic resin) in the resin composition of the present embodiment is preferably 55% by mass or more, more preferably 60% by mass or more and even more preferably 65% by mass or more. The upper limit thereof is the amount at which all components other than the recycled carbon fiber and the flame retardant are the crystalline thermoplastic resin.

The resin composition of the present embodiment may comprise only one thermoplastic resin or two or more thermoplastic resins. When the resin composition comprises two or more thermoplastic resins, the total content is preferably within the above range.

<Recycled carbon fiber>

The resin composition of the present embodiment comprises 5 to 50 parts by mass of a recycled carbon fiber with respect to 100 parts by mass of a crystalline thermoplastic resin. In addition, the recycled carbon fiber is a baked product of a composite of a resin and a carbon fiber, and comprises a residue derived from the resin at a percentage of 10% by mass or more of the content of the recycled carbon fiber. When such a recycled carbon fiber is used, it is possible to obtain a resin composition that is excellent in environmental suitability and good in various properties, such as mechanical strength, and productivity.

The recycled carbon fiber used herein refers to a carbon fiber recovered from scraps of used carbon fiber-reinforced resins (for example, derived from aircraft, vehicles, electrical or electronic devices or the like) and intermediate products (prepregs) of carbon fiber-reinforced resins generated from the producing process of carbon fiber-reinforced resins, and the like. In contrast, the virgin carbon fiber used herein is generally a new carbon fiber that is not a recycled carbon fiber, such as those sold as a carbon fiber.

The recycled carbon fiber usually has a resin deposited thereon, resulting in a composite of the resin and a carbon fiber. The composite is preferably a composite of a resin containing a benzene ring and a carbon fiber, and more preferably a composite of an epoxy resin and a carbon fiber.

The type of carbon fiber is not particularly specified, but a PAN-based carbon fiber is preferred.

The number-average fiber diameter of the recycled carbon fiber is more preferably 3 $\mu$m or more and even preferably 4 $\mu$m or more. In addition, it is preferably 10 $\mu$m or less and more preferably 8 $\mu$m or less. When the number-average fiber diameter of the recycled carbon fiber is within such a range, it is easier to obtain a resin composition further improved in mechanical properties.

In the present embodiment, the recycled carbon fiber comprises an resin-derived residue at a percentage of 10% by mass or more, and preferably 12% by mass or more. When the percentage of the epoxy resin-derived residue is the lower limit or more, the effect as a sizing agent for carbon fibers is presumed to be effectively exhibited. In addition, the recycled carbon fiber preferably comprises a resin-derived residue preferably at a percentage of 25% by mass or less, more preferably 22% by mass or less, even more preferably 19% by mass, and still more preferably 16% by mass or less, and the percentage of the epoxy resin-derived residue may be 14% by mass or less. When the percentage of

the resin-derived residue is the upper limit or less, the effect of improving productivity is easily obtained while minimizing the reduction in mechanical strength due to the resin-derived residue.

The resin may be either a thermoplastic resin or a thermosetting resin, and it is preferably a thermosetting resin.

In the present embodiment, the resin is preferably a resin containing a benzene ring. When the resin contains a benzene ring, a carbonized material in a carbon fiber easily forms char and easily blocks oxygen, and flame retardancy tends to be improved.

Specific examples of the resin include an epoxy resin, an aromatic polyester resin, an aromatic polycarbonate resin, a wholly aromatic polyester, an aromatic polyamide, an aromatic polyether and a polyphenylene, and an epoxy resin is preferred.

In the present embodiment, the resin is more preferably an epoxy resin containing a benzene ring, and even more preferably an epoxy resin having a bisphenol structure.

The resin may optionally comprise an additive. Examples of the additive include a curing agent, a curing aid, an internal release agent, a flame retardant, an antioxidant, a light stabilizer, a UV absorber and a colorant.

The recycled carbon fiber to be used in the present embodiment can be obtained by baking a composite of a resin and a carbon fiber. The amount of a residue derived from the resin is achieved by baking in a continuous incinerator, baking in a nitrogen atmosphere and/or baking at a predetermined temperature, and the like. For example, reference can be made to the description in International Publication No. WO 2018/212016, the content of which is incorporated herein.

The content of the recycled carbon fiber in the resin composition of the present embodiment is 5 to 50 parts by mass with respect to 100 parts by mass of a crystalline thermoplastic resin. The content of the recycled carbon fiber is preferably 7 parts by mass or more, more preferably 9 parts by mass or more, even more preferably 11 parts by mass or more, still more preferably 12 parts by mass or more, and further more preferably 14 parts by mass or more, with respect to 100 parts by mass of a crystalline thermoplastic resin. When the content of the recycled carbon fiber is the above lower limit or more, the resulting molded article is improved in strength. In addition, the content of the recycled carbon fiber in the resin composition of the present embodiment is preferably 90 parts by mass or less, more preferably 70 parts by mass or less and even more preferably 50 parts by mass or less, with respect to 100 parts by mass of a crystalline thermoplastic resin, and it may be also 48 parts by mass or less, 47 parts by mass or less, 40 parts by mass or less, 35 parts by mass or less, 25 parts by mass or less or 20 parts by mass or less, depending on the application or the like. When the content of the recycled carbon fiber is the above upper limit or less, the resin composition is more excellent in flowability and a molded article better in appearance and smoothness can be easily obtained.

In addition, the resin composition of the present embodiment comprises a recycled carbon fiber at a percentage of preferably 5% by mass or more and more preferably 8% by mass or more, and preferably 40 % by mass or less, more preferably 30% by mass or less, even more preferably 25% by mass or less and still more preferably 20% by mass or less, in terms of the substantial amount of carbon fiber in the composition.

The resin composition of the present embodiment may comprise only one recycled carbon fiber or two or more recycled carbon fibers. When the resin composition comprises two or more recycled carbon fibers, the total content is preferably within the above range.

The composition of the present embodiment may or may not comprise a virgin carbon fiber. One example of the composition of the present embodiment is an aspect which comprises a virgin carbon fiber at a percentage of 5 to 50% by mass (preferably 5 to 30% by mass) of the content of a recycled carbon fiber. Another example of the composition of the present embodiment is an aspect in which the content of a virgin carbon fiber is less than 5% by mass (preferably less than 3% by mass and more preferably less than 1% by mass) of the content of a recycled carbon fiber.

<Flame retardant>

The resin composition of the present embodiment comprises 5 to 60 parts by mass of a flame retardant with respect to 100 parts by mass of a crystalline thermoplastic resin. When the resin composition contains a flame retardant, the resulting molded article can be improved in flame retardancy.

Examples of the flame retardant include a halogen-based flame retardant, a phosphorus-based flame retardant (such as a metal phosphinate or melamine polyphosphate), a nitrogen-based flame retardant (such as melamine cyanurate), and a metal hydroxide (such as magnesium hydroxide), and a phosphorus-based flame retardant and a halogen-based flame retardant are preferred and a halogen-based flame retardant is more preferred. The phosphorus-based flame retardant is more preferably a metal phosphinate. The halogen-based flame retardant is more preferably a bromine-based flame retardant.

The type of bromine-based flame retardant is not particularly limited, but the bromine-based flame retardant is preferably a brominated phthalimide, a brominated poly(meth)acrylate, a brominated polycarbonate, a brominated epoxy and a brominated polystyrene, and more preferably a brominated epoxy.

The brominated phthalimide is preferably one represented by the formula (1):

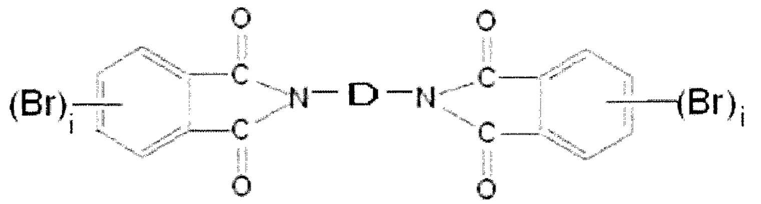 (1)

wherein D represents a group consisting of a combination of two or more of an alkylene group, an arylene group, $-S(=O)_2-$, - C(=O)- and -O-; and i is an integer from 1 to 4.

In the formula (1), D represents a group consisting of a combination of two or more of an alkylene group, an arylene group, $-S(=O)_2-$, -C(=O)- and -O-; preferably a group consisting of a combination of an alkylene group or an arylene group and at least one of $-S(=O)_2-$, -C(=O)- and -O-; more preferably a group consisting of a combination of an alkylene group or an arylene group and one of $-S(=O)_2-$, -C(=O)- and -O-; and even more preferably an alkylene group.

The group consisting of a combination of an alkylene group and -O- is intended to also include, for example, a combination of two alkylene groups and one -O- (the same applies to the other combinations).

The alkylene group as D is preferably an alkylene group having 1 to 6 carbon atoms, and more preferably a methylene group, an ethylene group, a propylene group and a butylene group. The arylene group is preferably a phenylene group.

i is an integer of 1 to 4, and preferably 4.

Examples of the brominated phthalimide represented by the formula (1) include N,N'-(bistetrabromophthalimide)ethane, N,N'-(bistetrabromophthalimide)propane, N,N'-(bistetrabromophthalimide)butane, N,N'-(bistetrabromophthalimide) diethyl ether, N,N'-(bistetrabromophthalimide) dipropyl ether, N,N'-(bistetrabromophthalimide) dibutyl ether, N,N'-(bistetrabromophthalimide) diphenyl sulfone, N,N'-(bistetrabromophthalimide) diphenyl ketone and N,N'-(bistetrabromophthalimide) diphenyl ether.

The brominated phthalimide represented by the formula (1) is preferably a brominated phthalimide represented by the formula (2):

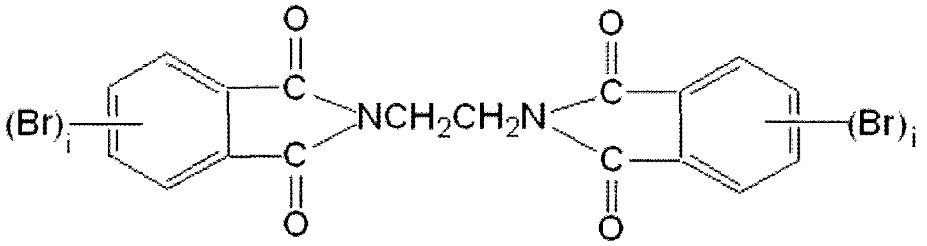 (2)

wherein i is an integer of 1 to 4.

i is an integer of 1 to 4 and preferably 4.

The brominated poly(meth)acrylate is preferably a polymer obtaining by polymerizing one benzyl (meth)acrylate containing a bromine atom, copolymerizing two or more thereof, or copolymerizing it with the other vinyl-based monomer, and the bromine atom is attached to a benzene ring, and 1 to 5 bromine atoms, particularly 4 or 5 bromine atoms are preferably attached to one benzene ring.

Examples of the benzyl acrylate containing a bromine atom include pentabromobenzyl acrylate, tetrabromobenzyl acrylate and tribromobenzyl acrylate and a mixture thereof. Examples of the benzyl methacrylate containing a bromine atom include methacrylates corresponding the above-described acrylates.

Specific examples of the other vinyl-based monomer to be used for copolymerizing with the benzyl meth(acrylate) containing a bromine atom include an acrylic acid and an acrylate such as methyl acrylate, ethyl acrylate, butyl acrylate or benzyl acrylate; a methacrylic acid and a methacrylate such as methyl methacrylate, ethyl methacrylate, butyl methacrylate or benzyl methacrylate; styrene, acrylonitrile, an unsaturated carboxylic acid such as fumaric acid or maleic acid and an anhydride thereof; vinyl acetate, and vinyl chloride.

These are usually preferably used in an equimolar amount or less to the benzyl (meth)acrylate containing a bromine atom, and particularly preferably in an amount of 0.5 times the molar amount of the benzyl (meth)acrylate containing a bromine atom.

Examples of the vinyl-based monomer to be used can include xylene diacrylate, xylene dimethacrylate, tetrabromoxylene diacrylate, tetrabromoxylene dimethacrylate, butadiene, isoprene and divinylbenzene, and these can be usually used in an amount of 0.5 times the molar amount of the benzyl acrylate or benzyl methacrylate containing a bromine atom.

The brominated poly(meth)acrylate is preferably a polymer obtaining by polymerizing one (meth)acrylate monomer, particularly benzyl meth(acrylate) containing a bromine atom, copolymerizing two or more thereof, or copolymerizing it with the other vinyl-based monomer. The bromine atom is attached to a benzene ring, and 1 to 5 bromine atoms, particularly 4 or 5 bromine atoms is preferably attached to one benzene ring.

The brominated poly(meth)acrylate is preferably a pentabromobenzyl poly(meth)acrylate due to a high bromine content.

The molecular weight of the brominated poly(meth)acrylate is arbitrary and may be selected and determined as appropriate, but the weight-average molecular weight (Mw) thereof is preferably 3,000 or more, more preferably 10,000 or more and even more preferably 15,000 or more. When the weight-average molecular weight (Mw) is the above lower limit or more, a molded article having a stronger mechanical strength tends to be obtained. In addition, the upper limit of the weight-average molecular weight (Mw) is preferably 100,000 or less, more preferably 80,000 or less, even more preferably 60,000 or less, still more preferably 50,000 or less, and further more preferably 35,000 or less. When the weight-average molecular weight (Mw) is the above upper limit or less, the resin composition tends to be further improved in flowability.

The brominated polycarbonate preferably has a free bromine content of 0.05% by mass or more, and preferably 0.20% by mass or less. When the free bromine content is in such a range, the resin composition tends to be further improved in thermal stability. In addition, the brominated polycarbonate preferably has a chlorine atom content of 0.001% by mass or more and also preferably has a chlorine atom content of 0.20% by mass or less. When the content is in such a range, mold corrosion resistance during molding tends to be further improved.

Specifically, the brominated polycarbonate is preferably, for example, a brominated polycarbonate obtained from brominated bisphenol A, particularly tetrabromobisphenol A. Examples of the terminal structure of the brominated polycarbonate include a phenyl group, a 4-tert-butylphenyl group and a 2,4,6-tribromophenyl group, and one having a 2,4,6-tribromophenyl group in the terminal structure is particularly preferred.

The average number of carbonate building blocks in the brominated polycarbonate may be selected and determined as appropriate, but it is preferably from 2 to 30, more preferably from 3 to 15 and even more preferably from 3 to 10.

The molecular weight of the brominated polycarbonate is arbitrary and may be selected and determined as appropriate, but the viscosity-average molecular weight (Mw) thereof is preferably 1,000 to 20,000 and particularly preferably 2,000 to 10,000.

The above-described brominated polycarbonate obtained from brominated bisphenol A can be obtained, for example, by a conventional method of reacting brominated polycarbonate with phosgene. An aromatic monohydroxy compound is to be used as an end-capping agent, which is optionally substituted with a halogen or an organic group.

Specific examples of the brominated epoxy preferably include a bisphenol A-type brominated epoxy compound represented by a tetrabromobisphenol A epoxy compound and a glycidyl brominated bisphenol A epoxy compound.

The molecular weight of the brominated epoxy compound is arbitrary and may be selected and determined as appropriate, but the weight-average molecular weight (Mw) thereof is preferably 3,000 or more, more preferably 10,000 or more, even more preferably 13,000 or more, still more preferably 15000 or more, and further more preferably 18,000. When the weight-average molecular weight (Mw) is the above lower limit or more, a molded article having a stronger mechanical strength tends to be obtained. In addition, the upper limit of the weight-average molecular weight (Mw) is preferably 100,000 or less, more preferably 80,000 or less, even more preferably 78,000 or less, still more preferably 75,000 or less, and further more preferably 70,000 or less. When the weight-average molecular weight (Mw) is the above upper limit or less, the resin composition tends to be further improved in flowability.

The brominated epoxy compound preferably has an epoxy equivalent of 3,000 to 40,000 g/eq, particularly preferably 4,000 to 35,000 g/eq and especially preferably 10,000 to 30,000 g/eq.

Furthermore, a brominated epoxy oligomer can also be used in combination as a brominated epoxy. At this time, by using an oligomer having an Mw of, for example, 5,000 or less at a percentage of about 50% by mass or less, flame retardancy, mold releasability and flowability can be adjusted as appropriate. The bromine atom content in the brominated epoxy compound is arbitrary, but from the viewpoint of imparting sufficient flame retardancy, it is usually 10% by mass or more, particularly preferably 20% by mass or more and especially preferably 30% by mass or more. The upper limit thereof is preferably 60% by mass and particularly preferably 55% by mass or less.

Examples of the brominated polystyrene preferably include a brominated polystyrene containing a building block represented by the formula (3):

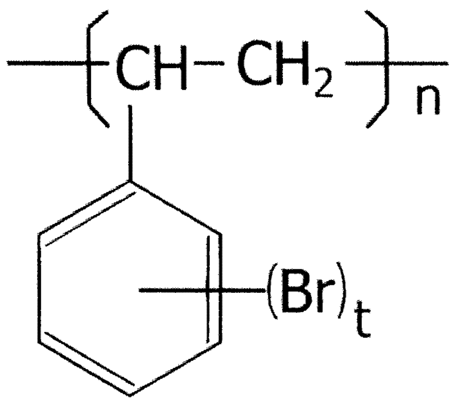

(3)

wherein t is an integer of 1 to 5, and n is the number of building blocks.

The brominated polystyrene may be one produced by either brominating polystyrene or polymerizing a brominated styrene monomer, but one produced by polymerizing a brominated styrene monomer is preferred due to a small amount of free bromine (atoms). In the formula (3), the CH group to which the brominated benzene is attached may be substituted with a methyl group. The brominated polystyrene may be also a copolymer having the other vinyl-based monomer copolymerized therewith. Examples of the vinyl-based monomer in this case include styrene, α-methylstyrene, (meth)acrylonitrile, methyl (meth)acrylate, butadiene and vinyl acetate. The brominated polystyrene to be used may be one brominated polystyrene having a single structure and a mixture of two or more brominated polystyrenes different in structure, and may contain, in a single molecular chain, units derived from styrene monomers different in the number of bromines.

Specific examples of the brominated polystyrene include poly(4-bromostyrene), poly(2-bromostyrene), poly(3-bromostyrene), poly(2,4-dibromostyrene), poly(2,6-dibromostyrene), poly(2,5-dibromostyrene), poly(3,5-dibromostyrene), poly(2,4,6-tribromostyrene), poly(2,4,5-tribromostyrene), poly(2,3,5-tribromostyrene), poly(4-bromo-α-methylstyrene), poly(2,4-dibromo-α-methylstyrene), poly(2,5-dibromo-α-methylstyrene), poly(2,4,6 - tribromo-α-methylstyrene) and poly(2,4,5-tribromo-α-methylstyrene). Poly(2,4,6-tribromostyrene), poly(2,4,5-tribromostyrene), and polydibromostyrene and polytribromostyrene containing an average of 2 to 3 bromine groups in a benzene ring is particularly preferably used.

The brominated polystyrene preferably has a number n of building blocks (average degree of polymerization) in the formula (3) of 30 to 1,500, more preferably 150 to 1,000 and particularly suitably 300 to 800. If the average degree of polymerization is less than 30, blooming tends to occur, whereas if it exceeds 1,500, poor dispersion tends to occur and mechanical properties tend to deteriorate. In addition, the weight-average molecular weight (Mw) of the brominated polystyrene is preferably 5,000 to 500,000, more preferably 10,000 to 500,000, even more preferably 10,000 to 300,000, still more preferably from 10,000 to 100,000, and further more preferably 10,000 to 70,000. In particular, in the case of the brominated polystyrene, the weight-average molecular weight (Mw) is preferably 50,000 to 70,000, whereas in the case of the brominated polystyrene obtained by polymerization, the weight-average molecular weight (Mw) is preferably about 10.000 to 30,000. The weight-average molecular weight (Mw) can be determined as a value in terms of standard polystyrene by GPC measurement.

When a metal phosphinate is used as a flame retardant, the type thereof is not particularly limited, but the metal phosphinate is preferably one in which the anion part is represented by the formula (4) or (5) and the metal ion in the cation part is calcium, magnesium, aluminum or zinc:

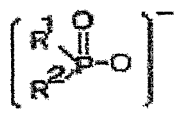

(4)

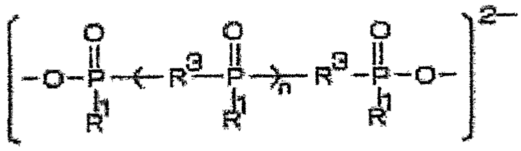

(5)

wherein $R^1$ and $R^2$, each independently, represents an alkyl group having 1 to 6 carbon atoms and an aryl group optionally having a substituent; $R^1$ may, at each occurrence, be the same or different; $R^3$ represents a group consisting of an

alkylene group having 1 to 10 carbon atoms, an arylene group optionally a substituent and a combination thereof; and $R^3$ may, at each occurrence, be the same or different; and n represents an integer of 0 to 2.

The aryl group optionally having a substituent is preferably a phenyl group optionally having a substituent. When the aryl group has a substituent, it is preferably an alkyl group having 1 to 3 carbon atoms. The aryl group may be also preferably unsubstituted.

The arylene group optionally having a substituent is preferably a phenylene group having a substituent. The arylene group optionally having a substituent is preferably unsubstituted or has an alkyl group having 1 to 3 carbon atoms (a methyl group) as a substituent.

In the present embodiment, the metal phosphinate represented by the formula (5) is preferred. In the present embodiment, aluminum phosphinate is also preferred.

Specific examples of the metal phosphinate include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methane-di(methylphosphinate), magnesium methane-di(methylphosphinate), aluminum methane-bis(methylphosphinate), zinc methane-bis(methylphosphinate), calcium benzene-1,4-bis(methylphosphinate), magnesium benzene-1,4-bis(methylphosphinate), aluminum benzene-1,4-bis(methylphosphinate), zinc benzene-1,4-bis(methylphosphinate), calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate and zinc diphenylphosphinate.

For details of the metal phosphinate, reference can be made to the description of paragraphs 0052 to 0058 of International Publication No. WO 2010/010669, the content of which is incorporated herein.

The nitrogen-based flame retardant is preferably a salt of an amino group-containing triazine (a triazine having an amino group).

Specific examples of the salt of an amino group-containing triazine include cyanuric acid melamine/melam/melem double salt, a melamine phosphate (such as melamine polyphosphate or polyphosphoric acid melamine/melam/melem double salt), a melamine sulfate (such as melamine sulfate, dimelamine sulfate or dimelam pyrosulfate) and a melamine sulfonate (such as melamine methanesulfonate, melam methanesulfonate, melem methanesulfonate, methanesulfonic acid melamine/melam/melem double salt, melamine toluenesulfonate, melam toluenesulfonate or toluenesulfonic acid melamine/melam/melem double salt).

For the nitrogen-based flame retardant, reference can be made to the description of paragraphs 0108 to 0125 of International Publication No. WO 2019/093066 and the description of paragraphs 0060 to 0069 of International Publication No. WO 2010/010669, the contents of which are incorporated herein.

The content of the flame retardant in the resin composition of the present embodiment is 5 to 60 parts by mass with respect to 100 parts by mass of a crystalline thermoplastic resin. The content of the flame retardant depends on the type of flame retardant, but the lower limit thereof is preferably 6 parts by mass or more, more preferably 7 parts by mass or more, even more preferably 8 parts by mass or more, still more preferably 9 parts by mass or more, and further more preferably 10 parts by mass or more, and still further more preferably 12 parts by mass, with respect to 100 parts by mass of a crystalline thermoplastic resin. When the content is the above lower limit or more, the resulting molded article tends to be further improved in flame retardancy. The upper limit of the content of the flame retardant is preferably 50 parts by mass or less and more preferably 40 parts by mass or less, with respect to 100 parts by mass of a crystalline thermoplastic resin, and it may be 30 parts by mass or less or 20 parts by mass or less, depending on the type of the flame retardant. When the content is the above upper limit or less, the resulting molded article can be more effectively suppressed in a decrease in mechanical strength.

The resin composition of the present embodiment may comprise only one flame retardant or two or more flame retardants. When the resin composition comprises two or more flame retardants, the total content is preferably within the above range.

The resin composition of the present embodiment preferably has a mass ratio (b)/(c) of the recycled carbon fiber (b) to the flame retardant (c) in the resin composition of 0.4 or more, more preferably 0.6 or more, and even more preferably 0.7 or more. When the mass ratio (b)/(c) is the above lower limit or more, the resulting molded article tends to increase in strength and also tends to be able to be maintained high in flame retardancy. The upper limit of the mass ratio (b)/(c) is preferably 10 or less, more preferably 7 or less, even more preferably 5 or less, and still more preferably 3 or less. When the resin composition is comprised in this manner, the flame retardancy tends to be further improved and the resulting molded article also tends to be able to be maintained high in flame retardancy.

Examples of the resin composition having a mass ratio (b)/(c) of 0.4 or more include a resin composition comprising 12 parts by mass or more of a recycled carbon fiber (b) and 30 parts by mass or less of a flame retardant (c), with respect to 100 parts by mass of a thermoplastic resin (preferably crystalline thermoplastic resin); examples of

the resin composition having a mass ratio (b)/(c) of 0.6 or more include a resin composition comprising 12 parts by mass or more of a recycled carbon fiber (b) and 20 parts by mass or less of a flame retardant (c), with respect to 100 parts by mass of a thermoplastic resin (preferably crystalline thermoplastic resin); and examples of the resin composition having a mass ratio (b)/(c) of 0.7 or more include a resin composition comprising 14 parts by mass of more of a recycled carbon fiber (b) and 20 parts by mass or less of a flame retardant (c), with respect to 100 parts by mass of a thermoplastic resin (preferably crystalline thermoplastic resin).

Examples of the resin composition having a mass ratio (b)/(c) of 10 or less include a resin composition comprising 70 parts by mass or less of a recycled carbon fiber (b) and 7 parts by mass or more of a flame retardant (c), with respect to 100 parts by mass of a thermoplastic resin (preferably crystalline thermoplastic resin);

examples of the resin composition having a mass ratio (b)/(c) of 7 or less include a resin composition comprising 70 parts by mass or less of a recycled carbon fiber (b) and 10 parts by mass or more of a flame retardant (c), with respect to 100 parts by mass of a thermoplastic resin (preferably crystalline thermoplastic resin);

examples of the resin composition having a mass ratio (b)/(c) of 0.5 or less include a resin composition comprising 19 parts by mass or less (preferably 18.66 parts by mass or less) of a recycled carbon fiber (b) and 37.82 (21.59 + 16.23) parts by mass or more (more preferably 38 parts by mass or more) of a flame retardant (c), with respect to 100 parts by mass of a thermoplastic resin (preferably crystalline thermoplastic resin); and

examples of the resin composition having a mass ratio (b)/(c) of 1 or less include a resin composition comprising 46 parts by mass or less (preferably 45.87 parts by mass or less) of a recycled carbon fiber (b) and 46 parts by mass or more (preferably 46.5 (26.54 + 19.96) parts by mass or more) of a flame retardant (c), with respect to 100 parts by mass of a thermoplastic resin (preferably crystalline thermoplastic resin).

<Flame retardant aid>

The resin composition of the present embodiment may comprise a flame retardant aid. When the resin composition comprises a flame retardant aid, it preferably comprises an antimony compound. The flame retardant aid (preferably antimony compound) tends to act with, for example, a halogen-based frame retardant to synergistically improve flame retardancy.

The antimony compound is preferably antimony trioxide ($Sb_2O_3$), antimony pentoxide ($Sb_2O_5$) or sodium antimonate, and among these, antimony trioxide is particularly preferred.

In the resin composition of the present embodiment, the antimony compound may be blended as a masterbatch with a crystalline thermoplastic resin. This makes it easier for the antimony compound to exist in a crystalline thermoplastic resin phase, leading to good thermal stability during melt-kneading and molding processing and to suppression of deterioration in impact resistance. In addition, variations in flame retardancy and impact resistance tend to be decreased.

The content of the antimony compound in the masterbatch is preferably 20 to 90% by mass. The content of the antimony compound in the masterbatch is more preferably 30% by mass or more, even more preferably 40% by mass or more, still more preferably 50% by mass or more, further more preferably 60% by mass or more, and particularly more preferably 70% by mass or more.

The content of the flame retardant aid (preferably antimony compound) is preferably 0.1 parts by mass or more, more preferably 1.0 parts by mass or more, even more preferably 2.0 parts by mass or more, and still more preferably 3.0 parts by mass or more, with respect to 100 parts by mass of a crystalline thermoplastic resin. When the content is the above lower limit or more, the resulting molded article is further improved in flame retardancy. The upper limit of the content of the flame retardant aid (preferably antimony compound) is preferably 20.0 parts by mass or less, more preferably 15.0 parts by mass or less, even more preferably 10.0 parts by mass or less, still more preferably 8.0 parts by mass or less, and further more preferably 7.0 parts by mass or less, with respect to 100 parts by mass of a crystalline thermoplastic resin. When the content is the above upper limit or less, the resulting molded article tends to be improved in mold releasability and impact resistance.

<Other components>

The resin composition of the present embodiment may optionally comprise other components in addition to those described above as long as the desired physical properties are not significantly impaired. Examples of the other components include various resin additives. The resin composition may comprise one of the other components or any combination of two or more thereof at any ratio.

Specific examples of the other components include a functional group-containing compound, a nucleating agent, an anti-dripping agent, a stabilizer, a release agent, a pigment, a dye, a UV absorber, an antistatic agent, an anti-fogging agent, an antiblocking agent, a flowability improving agent, a plasticizer, a dispersant and an antimicrobial agent. The resin composition of the present embodiment preferably comprises at least one of a functional group-containing

compound, a nucleating agent, an anti-dripping agent, a stabilizer and a release agent.

The resin composition of the present embodiment is adjusted so that the total content of a crystalline thermoplastic resin, a recycled carbon fiber, a flame retardant, and the other components optionally blended is 100% by mass. In the resin composition of the present embodiment, the total content of a thermoplastic resin, a recycled carbon fiber and a flame retardant preferably accounts for 85% by mass or more, and more preferably 90% by mass of more of the resin composition. In the resin composition of the present embodiment, the total content of a thermoplastic resin (a crystalline thermoplastic resin or a crystalline thermoplastic resin and an amorphous thermoplastic resin), a recycled carbon fiber, a flame retardant, a flame retardant aid, a functional group-containing compound, a nucleating agent, an anti-dripping agent, a stabilizer and a release agent preferably accounts for 99% by mass or more of the resin composition.

«Functional group-containing compound»

The resin composition of the present embodiment may comprise a functional group-containing compound. Unlike a virgin carbon fiber, a recycled carbon fiber does not have a surface treatment agent deposited thereon. Therefore, it tends to be inferior in mechanical strength. When the functional group-containing compound is blended, the functional group-containing compound can serve in place of the surface treatment agent and improve its mechanical strength.

The functional group-containing compound to be used in the present embodiment, preferably comprises at least one selected from the group consisting of a compound having an epoxy group-containing compound, a carbodiimide compound, an oxazoline group-containing compound, an oxazine group-containing compound, a carboxy group-containing compound and an amide group-containing compound, and more preferably comprises an epoxy group-containing compound.

The functional group-containing compound preferably has a ratio of [weight-average molecular weight]/[functional group equivalent (unit of functional group equivalent: g/eq)] is 1 to 30, more preferably 1 to 10, even more preferably 1 to 6, and still more preferably 2 to 6. When the ratio of [weight-average molecular weight]/[functional group equivalent is the lower limit or more, the number of functional groups per molecule of the functional group-containing compound increases, and the effect of improving the affinity between the recycled carbon fiber and the crystalline thermoplastic resin is presumably increased due to the reaction with the functional group-containing compound. In contrast, when the ratio of [weight-average molecular weight]/[functional group equivalent is the upper limit or less, no excessive reaction thereof with the terminal carboxylic acid of the polyester resin occurs and the flowability of the resin composition thereby tends to be improved.

The functional group-containing compound preferably has a weight average-molecular weight of 15,000 or less, more preferably 10,000 or less, and even more preferably 5,000 or less. When the weight average-molecular weight is the above upper limit or less, the crystalline thermoplastic resin tends to be excellent in flowability. The lower limit of the weight average-molecular weight is preferably 100 or more, more preferably 200 or more, and even preferably 500 or more. When the weight average-molecular weight is the above lower limit or more, outgassing during melt heating can be suppressed at a lower level. The weight average-molecular weight of the functional group-containing compound is measured in terms of polystyrene by gel permeation chromatography (hereinafter referred to as "GPC").

The functional group equivalent of the functional group-containing compound is preferably 100 g/eq or more, more preferably 150 g/eq or more, and even more preferably 200 g/eq or more. The functional group equivalent of the functional group-containing compound is preferably 1,500 g/eq, more preferably 900 g/eq or less, and even more preferably 800 g/eq or less.

When the functional group equivalent is the above lower limit or more, the dispersion of the recycled carbon fiber is suppressed more effectively and the flowability of the resin composition during extrusion and molding tends to be improved. When the functional group equivalent is the above upper limit or less, hydrolysis resistance and weather resistance tend to be further improved.

The functional group equivalent can be measured according to JIS K7236.

<<Epoxy group-containing compound>>

The above-described epoxy group-containing compound is a compound having one or more epoxy groups in one molecule, and includes a glycidyl compound, an aromatic ring-containing compound having one or more epoxy groups and an aliphatic compound having one or more epoxy groups. At least the aromatic ring-containing compound having one or more epoxy groups are preferably contained.

Specific examples of the epoxy group-containing compound include a bisphenol A type epoxy compound (including bisphenol A diglycidyl ether), a bisphenol F type epoxy compound (including bisphenol F diglycidyl ether), a biphenyl type epoxy compound (including bis(glycidyloxy)biphenyl), a resorcinol type epoxy compound (including resorcinol diglycidyl ether), a novolac type epoxy compound; an aromatic ring-containing compound such as glycidyl benzoate, diglycidyl terephthalate or diglycidyl orthophthalate; a (di)glycidyl ether such as methyl glycidyl ether, butyl glycidyl ether,

2-ethylhexyl glycidyl ether, decyl glycidyl ether, stearyl glycidyl ether, phenyl glycidyl ether, butylphenyl glycidyl ether, allyl glycidyl ether, neopentyl glycol diglycidyl ether, ethylene glycol diglycidyl ether, glycerin diglycidyl ether or propylene glycol diglycidyl ether; a paraffinic (such as saturated fatty acid-based) or olefinic (such as unsaturated fatty acid-based) (di)glycidyl ester such as glycidyl sorbate, diglycidyl adipate, epoxidized linseed oil or epoxidized soybean oil; an alicyclic epoxy compound such as vinylcyclohexene dioxide or dicyclopentadiene oxide; and an epoxy-modified styrene-acrylic copolymer.

Among them, a styrene-acrylic copolymer containing a glycidyl group(s) in its side chain, a bisphenol A type epoxy compound, a novolac type epoxy compound, a bisphenol F type epoxy compound, a biphenyl type epoxy compound and the like are preferred, and a bisphenol A type epoxy compound is more preferred.

For details of the carbodiimide compound, the oxazoline group-containing compound, the oxazine-group containing compound, the carboxy group-containing compound and the amide group-containing compound, reference can be made to the description of paragraphs 0099 to 0107 of Japanese Patent Laid-Open No. 2021-091214, the content of which is incorporated herein.

When the resin composition of the present embodiment comprises a functional group-containing compound, it comprises preferably 0.10 parts by mass or more, more preferably 0.50 parts by mass or more, even more preferably 1.00 parts by mass or more, still more preferably 1.50 parts by mass or more, and further more preferably 2.00 parts by mass or more of a functional group-containing compound, with respect to 100 parts by mass of a crystalline thermoplastic resin. When the content of the functional group-containing compound is the above lower limit or more, the mechanical strength can be further improved. The upper limit of the functional group-containing compound is preferably 5.00 parts by mass or less, more preferably 4.00 parts by mass or less, even more preferably 3.00 parts by mass or less, further more preferably 2.50 parts by mass or less, with respect to 100 parts by mass of a crystalline thermoplastic resin. When the content of the functional group-containing compound is the above upper limit or less, a change in the viscosity and gelation acceleration, due to retention in an extruder, can be further reduced.

The resin composition of the present embodiment may comprise only one functional group-containing compound or two or more functional group-containing compounds. When the resin composition comprises two or more functional group-containing compounds, the total content is preferably within the above range.

«Nucleating agent»

The resin composition of the present embodiment may comprise a nucleating agent in order to adjust the crystallization rate. The type of nucleating agent is not particularly limited, but the nucleating agent is preferably talc, boron nitride, mica, kaolin, barium sulfate, silicon nitride or molybdenum disulfide, more preferably barium sulfate, talc or boron nitride, even more preferably barium sulfate or talc, and still more preferably talc.

When the resin composition of the present embodiment comprises a nucleating agent, the content thereof is preferably 0.01 parts by mass or more, more preferably 0.1 parts by mass or more, and even more preferably 0.5 parts by mass or more, with respect to 100 parts by mass of a crystalline thermoplastic resin. The upper limit of the content of the nucleating agent is preferably 10 parts by mass or less, more preferably 8 parts by mass or less, even more preferably 6 parts by mass or less and still more preferably 4 parts by mass or less, with respect to 100 parts by mass of a crystalline thermoplastic resin.

The resin composition of the present embodiment may comprise only one nucleating agent or two or more nucleating agents. When the resin composition comprises two or more nucleating agents, the total content is preferably within the above range.

<<Anti-dripping agent>>

The resin composition of the present embodiment may comprise an anti-dripping agent.

The anti-dripping agent is preferably a fluoropolymer, and examples of the fluoropolymer include a fluoroolefin resin. The fluoroolefin resin is usually a polymer (including a copolymer) having a fluoroethylene structure. Specific examples of the fluoroolefin resin include a difluoroethylene resin, a tetrafluoroethylene resin, a tetrafluoroethylene/hexafluoropropylene resin, a tetrafluoroethylene/perfluoroalkyl vinyl ether resin. Among them, a tetrafluoroethylene resin is preferred. This fluoroethylene resin is preferably a fluoroethylene resin having a fibril-forming ability.

Examples of the fluoroethylene resin having a fibril-forming ability include "Teflon (R) 6J", "Teflon (R) 640J" and "Teflon (R) 6C" manufactured by DuPont-Mitsui Fluorochemicals Co., Ltd., and "POLYFLON MPAF201L", "POLYFLON MPAF103" and "POLYFLON MPAFA500H" manufactured by Daikin Industries, Ltd. Examples of the commercially available aqueous dispersion of the fluoroethylene resin include "Teflon (R) 30J" and "Teflon (R) 31-JR" manufactured by DuPont-Mitsui Fluorochemicals Co., Ltd., and "Fluon D-1" manufactured by Daikin Industries, Ltd.

A fluoroethylene polymer having a multilayer structure obtained by polymerizing a vinyl-based monomer can be also used. Examples of such a fluoroethylene polymer include a polystyrene-fluoroethylene polymer, a polystyrene-acrylonitrile-fluoroethylene polymer, a polymethyl methacrylate-fluoroethylene polymer and a polybutyl methacrylate-fluoroethylene polymer. Specific examples thereof include "METABLEN A-3800" manufactured by Mitsubishi Chemical Corporation, and "Blendex 449" manufactured by GE Specialty Chemicals.

When the resin composition of the present embodiment contains an anti-dripping agent, the content thereof is preferably 0.01 parts by mass or more, more preferably 0.02 parts by mass or more and even more preferably 0.03 parts by mass or more, and preferably 5.00 parts by mass or less, more preferably 3.00 parts by mass or less, even more preferably 1.00 parts by mass or less and still more preferably 0.70 parts by mass or less, with respect to 100 parts by mass of a crystalline thermoplastic resin. When the content is the above lower limit or more, the effect of improving flame retardancy is more effectively exhibited, whereas when the content is the above the upper limit or less, the resulting molded article tends to be improved in appearance.

The resin composition of the present embodiment may comprise only one anti-dripping agent or two or more anti-dripping agents. When the resin composition comprises two or more anti-dripping agents, the total content is preferably within the above range.

«Stabilizer»

The resin composition of the present embodiment may comprise a stabilizer. Examples of the stabilizer include a hindered phenol-based compound, a hindered amine-based compound, a phosphorus-based compound and a sulfur-based stabilizer. Among them, the hindered phenol-based compound is preferred.

For the stabilizer, reference can be specifically made to the description of paragraphs 0046 to 0057 of Japanese Patent Laid-Open No. 2018-070722, the description of paragraphs 0030 to 0037 of Japanese Patent Laid-Open No. 2019-056035 and the description of paragraphs 0066 to 0078 of International Publication No. WO 2017/038949, the contents of which are incorporated herein.

The resin composition of the present embodiment preferably comprises 0.01 parts by mass or more, more preferably 0.05 parts by mass or more and even more preferably 0.08 parts by mass or more of the stabilizer, with respect to 100 parts by mass of a crystalline thermoplastic resin. The upper limit of the content of the stabilizer is preferably 3 parts by mass or less, more preferably 1 part by mass or less, even more preferably 0.5 parts by mass or less and still more preferably 0.4 parts by mass or less, with respect to 100 parts by mass of a crystalline thermoplastic resin.

The resin composition of the present embodiment comprises only one stabilizer or two or more stabilizers. When the resin composition comprises two or more stabilizers, the total content is preferably within the above range.

«Release agent»

The resin composition of the present embodiment comprises a release agent.

As the release agent, any known release agent can be widely used, and a wax and an esterified product of an aliphatic carboxylic acid are preferred. The esterified product of an aliphatic carboxylic acid is preferably an esterified product of a polyhydric alcohol and an aliphatic carboxylic acid having 10 to 19 carbon atoms.

For the release agent, reference can be specifically made to the description of paragraphs 0063 to 0077 of Japanese Patent Laid-Open No. 2018-070722 and the description of paragraphs 0090 to 0098 of Japanese Patent Laid-Open No. 2019-123809, the contents of which are incorporated herein.

The resin composition of the present embodiment preferably comprises 0.01 parts by mass or more, more preferably 0.08 parts by mass or more and even more preferably 0.2 parts by mass or more of the release agent, with respect to 100 parts by mass of a crystalline thermoplastic resin. The upper limit of the content of the release agent is preferably 5 parts by mass or less, more preferably 3 parts by mass or less, even more preferably 1 part by mass or less and still more preferably 0.8 parts by mass or less, with respect to 100 parts by mass of a crystalline thermoplastic resin.

The resin composition may comprise only one release agent or two or more release agents. When the resin composition comprises two or more release agents, the total content is preferably within the above range.

<Physical properties of resin composition>

The resin composition of the present embodiment preferably has a smaller specific gravity. Specifically, the specific gravity is preferably 2.00 or less, more preferably 1.80 or less, even more preferably 1.60 or less, still more preferably 1.50 or less, and further more preferably 1.48 or less. The lower limit is not particularly specified, but it is practically above the specific gravity of the crystalline thermoplastic resin.

An ISO multi-purpose test specimen with a thickness of 4 mm obtained by molding the resin composition of the present embodiment preferably has a higher maximum flexural strength. Specifically, the maximum flexural strength

is preferably 170 MPa or more, more preferably 176 MPa or more, even more preferably 180 MPa or more. The upper limit of the maximum flexural strength is not particularly specified, but it is practically, for example, 300 MPa or less.

An ISO multi-purpose test specimen with a thickness of 4 mm obtained by molding the resin composition of the present embodiment preferably has a higher flexural modulus. Specifically, the flexural modulus is preferably 7,500 MPa or more, more preferably 8,000 MPa or more, even more preferably 9,000 MPa or more, and still more preferably more than 10,000 MPa. The upper limit of the maximum flexural strength is not particularly specified, but it is practically, for example, 30,000 MPa or less.

An ISO multi-purpose test specimen with a thickness of 4 mm obtained by molding the resin composition of the present embodiment preferably has a higher notched Charpy impact strength. Specifically, the notched Charpy impact strength is preferably 2.0 $kJ/m^2$ or more, more preferably 2.5 $kJ/m^2$ or more, and even more preferably 2.8 $kJ/m^2$ or more. The upper limit of the notched Charpy impact strength is not particularly specified, but it is practically, for example, 7.0 $kJ/m^2$ or less.

When the resin composition of the present embodiment is molded to a thickness of 1.5 mm and tested according to a UL test, a flame retardancy of V-0 is preferably achieved.

The specific gravity, flexural properties, Charpy impact strength and flame retardancy are measured according to the description in the following Examples.

<Process for producing resin composition>

The resin composition of the present embodiment can be produced by any conventional process for producing a resin composition comprising a thermoplastic resin and other components. For example, the resin composition of the present embodiment is produced by a process comprising: charging, into an extruder, 100 parts by mass of a crystalline thermoplastic resin, 5 to 40 parts by mass of a recycled carbon fiber and 5 to 60 parts by mass of a flame retardant; and melt kneading them. The recycled carbon fiber may sometimes have no surface treatment agent and/or no sizing agent deposited on the surface thereon. In contrast, in the present embodiment, the recycled carbon fiber is a baked product of a composite of a resin and a carbon fiber and a recycled carbon fiber comprising a residue derived from the resin at a percentage of 10 parts by mass or more is used, so that the residue derived from the resin can serve as a surface treatment agent and/or a sizing agent, or the like and the functional group-containing compound can serve as a surface treatment agent for the recycled carbon fiber, or the like, enabling melt kneading via charging into an extruder. As a result, a pellet formed from the resin composition of the present embodiment can be provided.

Each of the components may be pre-blended together and then fed to an extruder all at once, or may be fed to the extruder via a feeder without pre-blending or after pre-blending some of the components. The extruder may be a single-screw extruder or a twin-screw extruder. In addition, some component(s) may be melt kneaded with a resin component to prepare a masterbatch and the remaining component(s) may be then blended therewith and be subjected to melt kneading.

The recycled carbon fiber is also preferably fed through a side feeder located in one place of a cylinder of an extruder.

The heating temperature during melt-kneading can usually be appropriately selected from the range of 220 to 350°C.

The molded article of the present embodiment is formed form the resin composition of the present embodiment.

The molded article of the present embodiment can be preferably used in in various applications such as various storage containers, components of electrical and electronic devices, components of office automation (OA) devices, components of household electrical appliances, components of machinery mechanisms, components of vehicle mechanisms and components of automotive chassis, and is preferably used for components of automotive chassis.

<Process for producing molded article>

The process for producing a molded article is not particularly limited, and any molding process generally employed for a resin composition comprising a thermoplastic resin can be employed. Examples of the molding process include an injection molding process, an ultra-high speed injection molding process, an injection compression molding process, a two-color molding process, a hollow injection molding process such as a gas-assisted injection molding process, a molding process using heat insulation molds, a molding process using rapidly heated molds, a foam molding (including supercritical fluid) process, an insert molding process, an IMC molding process (in-mold coating molding process), an extrusion molding process, a sheet molding process, a thermoforming process, a rotational molding process, a laminate molding process, a press molding process and a blow molding process, and among them, an injection molding process is preferred.

For details of the injection molding process, reference can be made to paragraphs 0113 to 0116 of Japanese Patent No. 6183822, the contents of which are incorporated herein.

[Examples]

The present invention will be described more specifically with reference to Examples below. The materials, used amounts thereof, percentages thereof, processing details, processing procedures and the like shown in the following Examples can be changed as appropriate without departing from the subject matter of the present invention. Accordingly, the scope of the present invention is not intended to be limited to the specific examples shown below.

If the measuring devices and the like used in the Examples are discontinued and difficult to obtain, other devices having equivalent performance can be used for measurement.

1. Raw materials

The raw materials used are shown in Table -1-1 and Table 1-2 below.

[Table 1-1]

| Component | Symbol | |
|---|---|---|
| (A) Component Thermoplastic resin | a-1 | Polybutylene terephthalate resin, crystalline resin<br>IV = 0.85 dL/g AV = 13 eq/t |
| | a-2 | Polyethylene terephthalate resin, crystalline resin<br>IV = 0.63 dL/g AV = 30 eq/t |
| | a-3 | Polycarbonate resin, amorphous resin<br>Viscosity-average molecular weight: 16,000 |
| (B) Component Recycled carbon fiber | b-1 | Recycled carbon fiber obtained by baking a composite of a PAN-based carbon fiber (average fiber diameter: 6 μm) and an epoxy resin<br>Residual carbonized material: 1 3 % by mass |
| | b-2 | Recycled carbon fiber obtained by baking a composite of a PAN-based carbon fiber (average fiber diameter: 6 μm) and an epoxy resin<br>Residual carbonized material: 3 % by mass |
| | b-3 | Recycled carbon fiber obtained by baking a composite of a PAN-based carbon fiber (average fiber diameter: 6 μm) and an epoxy resin<br>Residual carbonized material:15% by mass |
| (B) ' Component Carbon fiber | b-x | PAN-based carbon fiber, virgin carbon fiber<br>Average fiber diameter: 6 μm<br>Carbonized material: 0% by mass |
| (C) Component Flame retardant | c-1 | Tetrabromobisphenol A-based epoxy compound<br>"CXB-2000H" manufactured by WOOJIN<br>Weight-average molecular weight: 19400 |
| | c-2 | Phosphorus-based flame retardant Metal phosphinate<br>"EXOLIT OP1240" manufactured by Clariant Chemicals |
| | c-3 | Nitrogen-based flame retardant Melamine cyanurate "Melamine cyanurate MCA" manufactured by SUNCHEMICAL Co., Ltd |

[Table 1-2]

| Component | Symbol | |
|---|---|---|
| (D) Component Antimony compound | d-1 | Antimony trioxide ($Sb_2O_3$)<br>"AT3CN" manufactured by SUZUHIRO CHEMICAL CO., LTD. |

(continued)

| Component | Symbol | |
|---|---|---|
| (E) Component Functional group-containing compound | e-1 | Bisphenol A type epoxy<br>Mw = 3300 Epoxy equivalent: 700 g / e q<br>"jER 1003" manufactured by Mitsubishi Chemical Corporation |
| Talc | f-1 | Talc<br>"Micron White 5000A" manufactured by HAYASHI KASEI CO., LTD. |
| PTFE | f-2 | Polytetrafluoroethylene<br>"Dyneon TF-1750" manufactured by 3M Company |
| Phenol-based stabilizer | f-3 | Hindered phenol-based antioxidant<br>"ADK STAB AO-60" manufactured by ADEKA CORPORATION |
| Release agent | f-4 | Oxidized polyethylene wax<br>"Licowax PED522" manufactured by Clariant AG |
| Barium sulfate | f-5 | Barium sulfate<br>"B54" manufactured by RESINO COLOR INDUSTRY CO., LTD. |

<Amount of residue>

The amount of residue of each recycled carbon fiber shown in Table 1-1 represents the amount of carbonized material in the recycled carbon fiber. That is, since the recycled carbon fiber to be used in the present Example is a baked product of a composite of a resin (such as an epoxy resin) and a carbon fiber, the recycled carbon fiber comprises a residue (carbonized material) derived from the resin (such as an epoxy resin). The amount of the resin residue is a value obtained from the formula (X) by calculating the mass of the carbon fiber comprised in the carbon fiber-reinforced resin before heat treatment from the carbon fiber content. The unit is expressed in % by mass.

$$[B - (A \times C)/(B)] \times 100 \text{ Equation X}$$

A: Mass of the carbon fiber-reinforced resin before heat treatment

B: Mass of heat-treated material

C: Carbon fiber content of the carbon fiber-reinforced resin before heat treatment

2. Examples 1 to 12 and Comparative Examples 1 to 2

<Production of resin composition (pellet)>

The components other than the recycled carbon fiber and the virgin carbon fiber, as shown in Table 3 to Table 5, were blended while stirring. Each component in Table 3 to Table 3 is expressed in parts by mass. The resulting blend was charged into a main hopper of a twin-screw extruder equipped with one vent, the recycled carbon fiber or virgin carbon fiber were fed through a side feeder, and they were kneaded under the temperature conditions of the melting temperature of the crystalline thermoplastic resin, a screw rotation speed of 250 rpm and a discharge amount of 200 kg/hour and then extruded into strands to obtain pellets of the resin composition.
In Comparative Example 2, the recycled carbon fiber could not be stably fed through the side feeder, so that the predetermined resin composition (pellet) could not be obtained.

<Productivity>

The productivity was evaluated based on whether or not pellets of the resin composition were obtained under conditions of a screw rotation speed of 250 rpm and a discharge amount of 200 kg/hour. The evaluation was made by a majority vote of five experts.

A: Pellets of the resin composition could be obtained.
B: Other than the above "A". For example, due to production problems, pellets of the resin composition could not be obtained, or the like.

<Specific gravity>

The specific gravity was measured in accordance with ISO 1183. Further, the specific gravity was evaluated as follows:

A: 1.50 g/cm$^3$ or less
B: more than 1.50 g/cm$^3$

<Maximum flexural strength and flexural modulus>

The pellets of the resin composition obtained above were dried at 120°C for 7 hours and then injection molded into ISO multi-purpose test specimens with a thickness of 4 mm under the conditions of a resin temperature of 250°C and a mold temperature of 80°C with an injection molding machine ("J-85AD-60H", manufactured by The Japan Steel Works, Ltd.) according to ISO 20753 and ISO 294-1.
The ISO flexural test specimens with a thickness of 4 mm obtained above were subjected to measurement of maximum flexural strength and flexural modulus with accordance with ISO 178 (unit: MPa).

<Notched Charpy impact strength>

The ISO multi-purpose test specimens obtained above were subjected to measurement of Charpy impact strength (notched) at 23°C with accordance with ISO 179-1 and ISO 179-2. The unit was expressed in kJ/m$^2$.

<Evaluation of mechanical strength>

The mechanical strength was evaluated based on the above maximum flexural strength as follows:

A: Maximum flexural strength of 190 MPa or more
B: Other than the above "A"

<Flame retardancy>

The pellets of the resin composition obtained above were dried at 120°C for 7 hours and then subjected to injection molding under the conditions of a resin temperature of 250°C and a mold temperature of 80°C with an injection molding machine ("SE50DUZ", manufactured by Sumitomo Heavy Industries, Ltd.) to obtain test specimens for UL testing, one having a length of 127 mm, a width of 12.7 mm and a wall thickness of 1.0 mm, and another having a length of 127 mm, a width of 12.7 mm and a wall thickness of 1.5 mm.
The obtained test specimens for UL testing were subjected to humidity conditioning in a constant temperature room at a temperature of 23°C and a relative humidity of 50% for 48 hours, and tested in accordance with the UL94 test (Flammability Test of Plastic Materials for Equipment Parts) established by UNDERWRITERS LABORATORIES INC. (UL) in the United States.
The UL94 test is a method of evaluating flame retardancy based on the afterflame time and dripping properties after exposing a test piece held vertically to a burner flame for 10 seconds. The test specimen needs to satisfy the standards shown in Table 2 below so as to have a flame retardancy of V-0, V-1 and V-2.

[Table 2]

| | V-0 | V-1 | V-2 |
|---|---|---|---|
| Afterflame time of each sample | 10 Seconds or less | 30 Seconds or less | 30 Seconds or less |

(continued)

| | V-0 | V-1 | V-2 |
|---|---|---|---|
| Total afterflame time of five samples | 50 Seconds or less | 250 Seconds or less | 250 Seconds or les |
| Cotton firing by dripping | None | None | Fired |

Further, the flame retardancy was evaluated as follows:

A: V-0

B: V-1

[Table 3]

| | Product name | Unit | Example 1 | Example 2 | Example 3 |
|---|---|---|---|---|---|
| Composition | (a-1) PBT | parts by mass | 100.00 | 100.00 | 100.00 |
| | (a-2) PET | | | | |
| | (a-3) PC | | | | |
| | (b-1) Recycled carbon fiber | | 16.28 | 16.73 | 15.93 |
| | (b-2) Recycled carbon fiber | | | | |
| | (b-3) Recycled carbon fiber | | | | |
| | (b-x) Carbon fiber | | | | |
| | (c-1) CXB2000H | | 15.29 | 17.90 | 14.96 |
| | (c-2) EXOLIT OP1240 | | | | |
| | (c-3) Melamine cyanurate MCA | | | | |
| | (d-1) AT3CN | | 3.96 | 4.66 | 3.88 |
| | (e-1) jER1003 | | 2.24 | 2.30 | |
| | (f-1) 5000A (Talc) | | 2.83 | 2.91 | 2.77 |
| | (f-2) TF1750 (PTFE) | | 0.42 | 0.44 | 0.42 |
| | (f-3) AO-60 (Stabilizer) | | 0.28 | 0.29 | 0.28 |
| | (f-4) PED522 (Release agent) | | 0.28 | 0.29 | 0.28 |
| | (f-5) B54 | | | | |
| (b)/(c) Mass ratio | | | 1.06 | 0.93 | 1.06 |
| Feature | Amount of carbonized material in recycled carbon fiber | % by mass | 13 | 13 | 13 |

(continued)

| | Product name | Unit | Example 1 | Example 2 | Example 3 |
|---|---|---|---|---|---|
| Evaluation | Productivity | | A | A | A |
| | Specific gravity | [g/cm3] | 1.44 | 1.46 | 1.44 |
| | | [Evaluation] | A | A | A |
| | Maximum flexural strength | [MPa] | 189 | 190 | 175 |
| | Flexural modulus | [MPa] | 10100 | 10200 | 10100 |
| | Amount of deflection in bending | [mm] | 4.5 | 3.9 | 4.5 |
| | Notched Charpy impact strength | [kJ/m$^2$] | 3.0 | 3.0 | 2.6 |
| | Evaluation of mechanical strength | Evaluation | A | A | B |
| | Flame retardancy | Evaluation | V-0 | V-0 | V-0 |
| | | Total afterflame time (seconds) | 21 | 15 | 22 |
| | | Evaluation | A | A | A |

| | Product name | Unit | Example 4 | Example 5 |
|---|---|---|---|---|
| Composition | (a-1) PBT | parts by mass | 100.00 | 100.00 |
| | (a-2) PET | | | |
| | (a-3) PC | | | |
| | (b-1) Recycled carbon fiber | | 11.40 | 37.73 |
| | (b-2) Recycled carbon fiber | | | |
| | (b-3) Recycled carbon fiber | | | |
| | (b-x) Carbon fiber | | | |
| | (c-1) CXB2000H | | 19.37 | 15.51 |
| | (c-2) EXOLIT OP1240 | | | |
| | (c-3) Melamine cyanurate MCA | | | |
| | (d-1) AT3CN | | 5.02 | 4.02 |
| | (e-1) jER1003 | | 2.24 | 2.59 |
| | (f-1) 5000A (Talc) | | 2.83 | 3.28 |
| | (f-2) TF1750 (PTFE) | | 0.43 | 0.49 |
| | (f-3) AO-60 (Stabilizer) | | 0.28 | 0.33 |
| | (f-4) PED522 (Release agent) | | 0.28 | 0.33 |
| | (f-5) B54 | | | |
| (b)/(c) Mass ratio | | | 0.59 | 2.43 |
| Feature | Amount of carbonized material in recycled carbon fiber | % by mass | 13 | 13 |

(continued)

| | Product name | Unit | Example 4 | Example 5 |
|---|---|---|---|---|
| Evaluation | Productivity | | A | A |
| | Specific gravity | [g/cm3] | 1.48 | 1.47 |
| | | [Evaluation] | A | A |
| | Maximum flexural strength | [MPa] | 159 | 253 |
| | Flexural modulus | [MPa] | 8400 | 18000 |
| | Amount of deflection in bending | [mm] | | |
| | Notched Charpy impact strength | [kJ/m$^2$] | 2.3 | 4.2 |
| | Evaluation of mechanical strength | Evaluation | B | A |
| | Flame retardancy | Evaluation | V-0 | V-0 |
| | | Total afterflame time (seconds) | 14 | 13 |
| | | Evaluation | A | A |

[Table 4]

| | Product name | Unit | Example 6 | Example 7 | Example 8 |
|---|---|---|---|---|---|
| Composition | (a-1) PBT | parts by mass | 100.00 | 100.00 | 100.00 |
| | (a-2) PET | | | | |
| | (a-3) PC | | | | |
| | (b-1) Recycled carbon fiber | | | | 18.66 |
| | (b-2) Recycled carbon fiber | | | | |
| | (b-3) Recycled carbon fiber | | 12.19 | 17.98 | |
| | (b-x) Carbon fiber | | | | |
| | (c-1) CXB2000H | | 16.93 | 15.49 | |
| | (c-2) EXOLIT OP1240 | | | | 21.59 |
| | (c-3) Melamine cyanurate MCA | | | | 16.28 |
| | (d-1) AT3CN | | 4.39 | 4.02 | |
| | (e-1) jER1003 | | 2.20 | 2.27 | |
| | (f-1) 5000A (Talc) | | 2.79 | 2.87 | 3.25 |
| | (f-2) TF1750 (PTFE) | | 0.42 | 0.43 | 0.49 |
| | (f-3) AO-60 (Stabilizer) | | 0.28 | 0.29 | 0.32 |
| | (f-4) PED522 (Release agent) | | 0.28 | 0.29 | 0.32 |
| | (f-5) B54 | | | | 1.62 |
| (b)/(c) Mass ratio | | | 0.72 | 1.16 | 0.49 |
| Feature | Amount of carbonized material in Recycled carbon fiber | % by mass | 15 | 15 | 13 |

(continued)

| | Product name | Unit | Example 6 | Example 7 | Example 8 |
|---|---|---|---|---|---|
| Evaluation | Productivity | | A | A | A |
| | Specific gravity | [g/cm3] | 1.43 | 1.43 | 1.41 |
| | | [Evaluation] | A | A | A |
| | Maximum flexural strength | [MPa] | 175 | 202 | 146 |
| | Flexural modulus | [MPa] | 8100 | 10500 | 11600 |
| | Amount of deflection in bending | [mm] | | | |
| | Notched Charpy impact strength | [kJ/m$^2$] | 3.4 | 3.8 | 2.7 |
| | Evaluation of mechanical strength | Evaluation | B | A | B |
| | Flame retardancy | Evaluation | V-0 | V-0 | V-0 |
| | | Total afterflame time (seconds) | 26 | 20 | 22 |
| | | Evaluation | A | A | A |
| | Product name | Unit | Example 9 | Example 10 | |
| Composition | (a-1) PBT | parts by mass | 100.00 | 70.00 | |
| | (a-2) PET | | | 30.00 | |
| | (a-3) PC | | | | |
| | (b-1) Recycled carbon fiber | | 45.87 | 11.10 | |
| | (b-2) Recycled carbon fiber | | | | |
| | (b-3) Recycled carbon fiber | | | | |
| | (b-x) Carbon fiber | | | | |
| | (c-1) CXB2000H | | | 16.76 | |
| | (c-2) EXOLIT OP1240 | | 26.54 | | |
| | (c-3) Melamine cyanurate MCA | | 19.96 | | |
| | (d-1) AT3CN | | | 4.35 | |
| | (e-1) jER1003 | | | 2.18 | |
| | (f-1) 5000A (Talc) | | 3.99 | 2.76 | |
| | (f-2) TF1750 (PTFE) | | 0.60 | 0.41 | |
| | (f-3) AO-60 (Stabilizer) | | 0.40 | 0.28 | |
| | (f-4) PED522 (Release agent) | | 0.40 | 0.28 | |
| | (f-5) B54 | | 2.00 | | |
| (b)/(c) Mass ratio | | | 0.99 | 0.66 | |
| Feature | Amount of carbonized material in Recycled carbon fiber | % by mass | 13 | 13 | |

(continued)

| | Product name | Unit | Example 9 | Example 10 |
|---|---|---|---|---|
| Evaluation | Productivity | | A | A |
| | Specific gravity | [g/cm3] | 1.44 | 1.45 |
| | | [Evaluation] | A | A |
| | Maximum flexural strength | [MPa] | 178 | 156 |
| | Flexural modulus | [MPa] | 20200 | 8300 |
| | Amount of deflection in bending | [mm] | | |
| | Notched Charpy impact strength | [kJ/m$^2$] | 3.4 | 2.1 |
| | Evaluation of mechanical strength | Evaluation | B | B |
| | Flame retardancy | Evaluation | V-0 | V-0 |
| | | Total afterflame time (seconds) | 18 | 2 |
| | | Evaluation | A | A |

[Table 5]

| | Product name | Unit | Example 11 | Example 12 |
|---|---|---|---|---|
| Composition | (a-1) PBT | parts by mass | 70.00 | 100.00 |
| | (a-2) PET | | 30.00 | |
| | (a-3) PC | | | 42.86 |
| | (b-1) Recycled carbon fiber | | 16.25 | 23.22 |
| | (b-2) Recycled carbon fiber | | | |
| | (b-3) Recycled carbon fiber | | | |
| | (b-x) Carbon fiber | | | |
| | (c-1) CXB2000H | | 15.27 | 21.81 |
| | (c-2) EXOLIT OP1240 | | | |
| | (c-3) Melamine cyanurate MCA | | | |
| | (d-1) AT3CN | | 3.96 | 5.66 |
| | (e-1) jER1003 | | 2.23 | 3.19 |
| | (f-1) 5000A (Talc) | | 2.83 | 4.04 |
| | (f-2) TF1750 (PTFE) | | 0.42 | 0.61 |
| | (f-3) AO-60 (Stabilizer) | | 0.28 | 0.40 |
| | (f-4) PED522 (Release agent) | | 0.28 | 0.40 |
| | (f-5) B54 | | | |
| | (b)/(c) Mass ratio | | 1.06 | 1.06 |
| Feature | Amount of carbonized material in Recycled carbon fiber | % by mass | 13 | 13 |

(continued)

| | Product name | Unit | Example 11 | Example 12 |
|---|---|---|---|---|
| Evaluation | Productivity | | A | A |
| | Specific gravity | [g/cm3] | 1.48 | 1.41 |
| | | [Evaluation] | A | A |
| | Maximum flexural strength | [MPa] | 166 | 196 |
| | Flexural modulus | [MPa] | 10900 | 10400 |
| | Amount of deflection in bending | [mm] | | |
| | Notched Charpy impact strength | [kJ/m$^2$] | 2.5 | 3.7 |
| | Evaluation of mechanical strength | Evaluation | B | A |
| | Flame retardancy | Evaluation | V-0 | V-0 |
| | | Total afterflame time (seconds) | 10 | 10 |
| | | Evaluation | A | A |
| | Product name | Unit | Comparative Example 1 | Comparative Example 2 |
| Composition | (a-1) PBT | parts by mass | 100.00 | 100.00 |
| | (a-2) PET | | | |
| | (a-3) PC | | | |
| | (b-1) Recycled carbon fiber | | | |
| | (b-2) Recycled carbon fiber | | | 13.87 |
| | (b-3) Recycled carbon fiber | | | |
| | (b-x) Carbon fiber | | 13.87 | |
| | (c-1) CXB2000H | | 14.98 | 14.98 |
| | (c-2) EXOLIT OP1240 | | | |
| | (c-3) Melamine cyanurate MCA | | | |
| | (d-1) AT3CN | | 3.88 | 3.88 |
| | (e-1) jER1003 | | 2.19 | 2.19 |
| | (f-1) 5000A (Talc) | | 2.77 | 2.77 |
| | (f-2) TF1750 (PTFE) | | 0.42 | 0.42 |
| | (f-3) AO-60 (Stabilizer) | | 0.28 | 0.28 |
| | (f-4) PED522 (Release agent) | | 0.28 | 0.28 |
| | (f-5) B54 | | | |
| | (b)/(c) Mass ratio | | 0.00 | 0.93 |
| Feature | Amount of carbonized material in Recycled carbon fiber | % by mass | 0 | 3 |

(continued)

| | Product name | Unit | Comparative Example 1 | Comparative Example 2 |
|---|---|---|---|---|
| Evaluation | Productivity | | A | B |
| | Specific gravity | [g/cm3] | 1.44 | - |
| | | [Evaluation] | A | - |
| | Maximum flexural strength | [MPa] | 213 | - |
| | Flexural modulus | [MPa] | 10200 | - |
| | Amount of deflection in bending | [mm] | 5.5 | |
| | Notched Charpy impact strength | [kJ/m$^2$] | 3.7 | - |
| | Evaluation of mechanical strength | Evaluation | A | - |
| | Flame retardancy | Evaluation | V-1 | - |
| | | Total afterflame time (seconds) | 62 | - |
| | | Evaluation | B | - |

As is clear from the above results, the resin composition of the present invention is a resin composition using a recycled carbon fiber as a reinforcing fiber, and it achieved mechanical strength comparable to that using a virgin carbon fiber and was excellent in productivity and also excellent in flame retardancy. In particular, although the resin composition of Example 1 had the same specific gravity as the resin composition of Comparative Example 1, the resin composition using recycled carbon fiber was more excellent in flame retardancy. In addition, when the recycled carbon fiber contained only a small amount of resin residue, pellets were not able to be produced, resulting in inferior productivity.

## Claims

**1.** A resin composition comprising:

100 parts by mass of a thermoplastic resin;
5 to 50 parts by mass of a recycled carbon fiber; and
5 to 60 parts by mass of a flame retardant;
wherein the recycled carbon fiber is a baked product of a composite of a resin and a carbon fiber, and comprises a residue derived from the resin at a percentage of 10% by mass or more of the content of the recycled carbon fiber.

**2.** The resin composition according to claim 1, wherein the thermoplastic resin comprises a crystalline thermoplastic resin.

**3.** The resin composition according to claim 1, wherein the thermoplastic resin comprises a polybutylene terephthalate resin.

**4.** The resin composition according to claim 1, wherein 30 to 100% by mass of the resin composition is a polybutylene terephthalate resin.

**5.** The resin composition according to any one of claims 1 to 4, wherein the recycled carbon fiber comprises a baked product of a composite of a resin containing a benzene ring and a carbon fiber.

**6.** The resin composition according to any one of claims 1 to 4, wherein the recycled carbon fiber comprises a baked product of a composite of an epoxy resin and a carbon fiber.

**7.** The resin composition according to any one of claims 1 to 4, wherein the flame retardant comprises a halogen-based flame retardant.

8. The resin composition according to any one of claims 1 to 4, further comprising 2.0 to 10.0 parts by mass of an antimony compound with respect to 100 parts by mass of the crystalline thermoplastic resin.

9. The resin composition according to any one of claims 1 to 4, further comprising at least one functional group-containing compound selected from the group consisting of an epoxy group-containing compound, a carbodiimide compound, an oxazoline group-containing compound, an oxazine group-containing compound, a carboxy group-containing compound and an amide group-containing compound.

10. The resin composition according to claim 9, wherein the functional group-containing compound comprises an epoxy group-containing compound.

11. The resin composition according to any one of claims 1 to 4, wherein the recycled carbon fiber comprises 25% by mass or less of a residue derived from the resin.

12. The resin composition according to claim 1, wherein:

30 to 100% by mass of the resin composition is a polybutylene terephthalate resin;
the recycled carbon fiber comprises a baked product of a composite of a resin containing a benzene ring and a carbon fiber;
the recycled carbon fiber comprises a baked product of a composite of an epoxy resin and a carbon fiber;
the flame retardant comprises a halogen-based flame retardant;
the resin composition further comprises 2.0 to 10.0 parts by mass of an antimony compound with respect to 100 parts by mass of the crystalline thermoplastic resin;
the resin composition further comprises at least one functional group-containing compound selected from the group consisting of an epoxy group-containing compound, a carbodiimide compound, an oxazoline group-containing compound, an oxazine group-containing compound, a carboxy group-containing compound and an amide group-containing compound; and
the recycled carbon fiber comprises 25% by mass or less of a residue derived from the resin.

13. The resin composition according to any one of claims 1 to 4 and 12, comprising 5 to 40 parts by mass of the recycled carbon fiber with respect to 100 parts by mass of the thermoplastic resin.

14. The resin composition according to any one of claims 1 to 4 and 12, wherein the mass ratio (b)/(c) of the recycled carbon fiber (b) to the flame retardant (c) in the resin composition is 0.4 or more.

15. A pellet formed from the resin composition according to any one of claims 1 to 4 and 12.

16. A molded article formed from the resin composition according to any one of claims 1 to 4 and 12.

17. The molded article according to claim 16, which is a component of automotive chassis.

**INTERNATIONAL SEARCH REPORT**

International application No.
**PCT/JP2022/042606**

**A. CLASSIFICATION OF SUBJECT MATTER**

***C08L 101/00***(2006.01)i; ***C08K 3/11***(2018.01)i; ***C08K 5/1515***(2006.01)i; ***C08K 7/06***(2006.01)i; ***C08L 63/00***(2006.01)i; ***C08L 67/02***(2006.01)i
FI: C08L101/00; C08K7/06; C08L67/02; C08L63/00; C08K5/1515; C08K3/11

According to International Patent Classification (IPC) or to both national classification and IPC

**B. FIELDS SEARCHED**

Minimum documentation searched (classification system followed by classification symbols)

C08L101/00; C08K3/11; C08K5/1515; C08K7/06; C08L63/00; C08L67/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-49820 A (SAKUMA TOKUSHUKO KK) 02 April 2020 (2020-04-02) | 1-17 |
| A | WO 2018/212016 A1 (SHINRYO CORP.) 22 November 2018 (2018-11-22) | 1-17 |
| A | JP 2014-122334 A (TECHNO POLYMER CO., LTD.) 03 July 2014 (2014-07-03) | 1-17 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/042606**

| Patent document cited in search report | Publication date (day/month/year) | Patent family member(s) | Publication date (day/month/year) |
|---|---|---|---|
| JP 2020-49820 A | 02 April 2020 | WO 2020/067109 A1 | |
| WO 2018/212016 A1 | 22 November 2018 | US 2020/0079918 A1 | |
| | | EP 3626769 A1 | |
| | | CN 110678507 A | |
| JP 2014-122334 A | 03 July 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016041800 A
- WO 2018212016 A
- JP 2021127405 A
- JP 2021021046 A
- WO 2010010669 A
- WO 2019093066 A
- JP 2021091214 A
- JP 2018070722 A
- JP 2019056035 A
- WO 2017038949 A
- JP 2019123809 A
- JP 6183822 B